# EUROPEAN PATENT APPLICATION

(11) **EP 4 276 159 A1**
(43) Date of publication of application: **15.11.2023**
(21) Application number: 22752618.3
(22) Date of filing: 28.01.2022
(51) Int. Cl.: C10B 45/00, F27D 21/00, G08C 19/00, H04Q 9/00, G08C 17/00, G01K 1/024

(54) **STEEL PLANT FACILITY MEASUREMENT SYSTEM, COKE OVEN, AND COKE PRODUCTION METHOD**

(30) Priority: 10.02.2021 JP 2021019761; 10.02.2021 JP 2021019763; 10.02.2021 JP 2021019766
(71) Applicant: JFE Steel Corporation, Tokyo 100-0011 (JP)
(72) Inventor: KUROKI, Takashi, Tokyo 100-0011 (JP); AOSHIMA, Satoshi, Tokyo 100-0011 (JP); NODA, Kenshi, Tokyo 100-0011 (JP); TSUTSUMI, Koichi, Tokyo 100-0011 (JP); OKUYAMA, Goro, Tokyo 100-0011 (JP); KAWAI, Toshimitsu, Tokyo 100-0011 (JP)
(74) Representative: Hoffmann Eitle
(86) International application number: PCT/JP2022/003403
(87) International publication number: WO 2022/172789

(57) **Abstract**

Provided is a measurement system for steelworks equipment that can operate with stand-alone power supply even in a location where wiring and maintenance are difficult and can reliably monitor measurement results at a position away from the installation location of a sensor. The measurement system for steelworks equipment comprises: a thermoelectric power generation device; a sensor; a conversion device configured to convert a signal output from the sensor into a signal that is wirelessly transmittable; a wireless transmission device configured to wirelessly transmit the signal converted by the conversion device; a relay device configured to relay the signal transmitted from the wireless transmission device; and a reception device configured to receive one or both of the signal transmitted from the wireless transmission device and the signal relayed by the relay device. The conversion device and the wireless transmission device are driven by power generated by the thermoelectric power generation device.

## Description

### TECHNICAL FIELD

The present disclosure relates to a measurement system for steelworks equipment, a coke oven, and a coke production method.

### BACKGROUND

In production equipment of various factories such as steelworks, sensors are used for measurement for various purposes such as operation status check, abnormality detection, and equipment maintenance. Wireless transmission of signals output from sensors is also performed in recent years. Wireless signal transmission is advantageous in that it increases the degree of freedom in sensor installation because there is no need to lay cables for signal transmission.

However, it is still necessary to supply power to the sensors themselves and devices for wireless transmission. For example, in the case of wired power supply, cables for power supply are needed, which reduces the foregoing advantage of using wireless transmission. Power supply using batteries eliminates the need for cables, but requires maintenance work such as battery replacement.

In view of this, techniques are proposed that allow sensors for wirelessly transmitting signals (hereafter also referred to as "wireless sensors") to have a power generation function to enable stand-alone power supply for a long period of time.

For example, JP 2013-122718 A (PTL 1) proposes a wireless sensor in which a vibration power generation element, a sensor, and an antenna for wireless transmission are mounted in an airtight package.

JP 2016-157356 A (PTL 2) proposes a wireless sensor in which a solar cell module, a sensor, and an antenna for wireless transmission are mounted in a package.

JP 2018-200518 A (PTL 3) proposes a thermoelectric power generator transmitter including a thermoelectric power generation module, a sensor, and a wireless module.

### CITATION LIST

### Patent Literature

PTL 1: JP 2013-122718 A
PTL 2: JP 2016-157356 A
PTL 3: JP 2018-200518 A

### SUMMARY

### (Technical Problem)

In each of the wireless sensors proposed in PTL 1 to PTL 3, a sensor can be supplied with power from a power generation device mounted integrally with the sensor. This eliminates the need for installation of power supply cables and maintenance work such as battery replacement.

Particularly in steelworks equipment, the object to be measured tends to be a very wide range, and the environment is usually harsh, such as high temperatures. Eliminating the need for installation of power supply cables and maintenance work such as battery replacement is therefore very advantageous.

However, the wireless sensor proposed in PTL 1 uses a vibration power generation element as a power source, and thus can only be used in locations where a certain amount of vibration occurs constantly.

The wireless sensor proposed in PTL 2 uses a solar cell as a power source, and thus can only be used in environments and time periods in which sufficient light is incident. To solve this problem, PTL 2 proposes to provide a power storage that stores the power generated by the solar cell module. However, a large power storage is required in order to stably continue operation even in environments in which light is not incident, such as at night. This causes an increase of the size of the wireless sensor.

PTL 3 describes the use of thermoelectric power generation, but does not reveal specifically how thermoelectric power generation is applied to steelworks equipment.

It could therefore be helpful to provide a measurement system for steelworks equipment that can operate with stand-alone power supply in various equipment of steelworks where wiring and maintenance are difficult and can reliably monitor measurement results at a position away from the installation location of a sensor. It could also be helpful to provide a coke oven and a coke production method using the measurement system for steelworks equipment.

### (Solution to Problem)

In view of the above, we provide the following.
1. A measurement system for steelworks equipment, comprising: a thermoelectric power generation device; a sensor; a conversion device configured to convert a signal output from the sensor into a signal that is wirelessly transmittable; a wireless transmission device configured to wirelessly transmit the signal converted by the conversion device; a relay device configured to relay the signal transmitted from the wireless transmission device; and a reception device configured to receive one or both of the signal transmitted from the wireless transmission device and the signal relayed by the relay device, wherein the conversion device and the wireless transmission device are driven by power generated by the thermoelectric power generation device.
2. The measurement system for steelworks equipment according to 1., wherein more relay devices are located in a part where an obstacle stays for a longer time than in a part where the obstacle stays for a shorter time.
3. The measurement system for steelworks equipment according to 1. or 2., wherein at least one relay device is installed on a moving obstacle.
4. The measurement system for steelworks equipment according to any one of 1. to 3., wherein the sensor is a temperature sensor.
5. A coke oven comprising the measurement system for steelworks equipment according to any one of 1. to 4.
6. A coke production method of producing coke using a coke oven, the coke production method comprising measuring a temperature of the coke oven using the measurement system for steelworks equipment according to any one of 1. to 4.

### (Advantageous Effect)

It is thus possible to provide a measurement system for steelworks equipment that can operate with stand-alone power supply in various equipment of steelworks where wiring and maintenance are difficult and can reliably monitor measurement results at a position away from the installation location of a sensor. The measurement system for steelworks equipment is suitable for use in various production equipment such as coke ovens.

### BRIEF DESCRIPTION OF THE DRAWINGS

In the accompanying drawings:
FIG. 1 is a schematic diagram illustrating an example of the structure of a coke oven;
FIG. 2 is a schematic diagram illustrating a measurement system for steelworks equipment according to an embodiment of the present disclosure;
FIG. 3 is a schematic diagram illustrating the arrangement of relay devices according to an embodiment of the present disclosure;
FIG. 4 is a schematic diagram illustrating the arrangement of relay devices according to an embodiment of the present disclosure; and
FIG. 5 is a schematic diagram illustrating the installation state of relay devices on a coal charging vehicle according to an embodiment of the present disclosure.

### DETAILED DESCRIPTION

### (Embodiment 1)

A measurement system according to Embodiment 1 of the present disclosure will be described below. In the following description, the "measurement system for steelworks equipment" is also simply referred to as the "measurement system".

The measurement system according to Embodiment 1 of the present disclosure includes the following components (1) to (6):
(1) a thermoelectric power generation device;
(2) a sensor;
(3) a conversion device that converts a signal output from the sensor into a wirelessly transmittable signal;
(4) a wireless transmission device that wirelessly transmits the signal converted by the conversion device;
(5) a relay device that relays the signal transmitted from the wireless transmission device; and
(6) a reception device that receives one or both of the signal transmitted from the wireless transmission device and the signal relayed by the relay device.

The conversion device (3) and the wireless transmission device (4) are driven by power generated by the thermoelectric power generation device (1).

Each component in the measurement system will be described below.

### [Thermoelectric power generation device]

The thermoelectric power generation device is a device capable of generating power by utilizing the temperature difference between one side (high temperature side) and the other side (low temperature side) of the thermoelectric power generation device. The thermoelectric power generation device typically includes a thermoelectric element that combines a p-type semiconductor and an n-type semiconductor.

The thermoelectric power generation device is not limited, and any thermoelectric power generation device may be used. The use of the thermoelectric power generation device makes it possible to generate power using heat from various equipment in a steelworks and drive the conversion device and the wireless transmission device using the generated power.

The heat source for generating power in the thermoelectric power generation device is not limited, and any heat source may be used. It is preferable to use a high temperature part of the steelworks equipment as the heat source. That is, it is preferable to directly or indirectly install the high temperature side of the thermoelectric power generation device in the high temperature part of the steelworks equipment. The thermoelectric power generation device preferably includes a heat receiving sheet on the high temperature side, from the viewpoint of enhancing the utilization efficiency of heat from the heat source. As the heat receiving sheet, for example, a metallic sheet or a ceramic sheet may be used.

The thermoelectric power generation device preferably includes a cooling means on the low temperature side, from the viewpoint of enhancing the power generation efficiency. As the cooling means, for example, one or both of a heat radiating member such as heat radiating fins and a heat exchanger that performs cooling by exchanging heat with a cooling medium such as water or oil may be used.

### [Sensor]

The sensor is not limited, and any sensor may be used depending on the object to be measured. As the sensor, for example, at least one selected from the group consisting of a temperature sensor, a pressure sensor, a flow sensor, a vibration sensor, and an acceleration sensor may be used. Examples of the temperature sensor include a thermocouple, a resistance temperature detector, and a thermistor.

The number of sensors is not limited, and may be any number of 1 or 2 or more. It is preferable to arrange a plurality of sensors at different points, from the viewpoint of obtaining information about the distribution of measured values. A plurality of sensors may be arranged at the same point, from the viewpoint of redundancy and accuracy improvement. From the viewpoint of measuring the distribution of measured values in more detail, a larger number of sensors is better, and accordingly no upper limit is placed on the number of sensors. Since the cost increases with the increase of the number of sensors, however, the number of sensors is preferably 1000 or less from the viewpoint of cost effectiveness.

### [Conversion device]

The conversion device converts a signal output from the sensor into a wirelessly transmittable signal. The conversion device is not limited, and any device such as a commercially available converter may be used.

### [Wireless transmission device]

The wireless transmission device wirelessly transmits the signal converted by the conversion device. The wireless transmission device is not limited, and any device capable of signal transmission, such as a commercially available device, may be used.

The number of thermoelectric power generation devices, the number of sensors, the number of conversion devices, and the number of wireless transmission devices included in the measurement system for steelworks equipment according to the present disclosure may be the same or different. For example, one thermoelectric power generation device may supply power to a plurality of conversion devices and a plurality of wireless transmission devices. Signals output from a plurality of sensors may be collectively transmitted by one conversion device and one wireless transmission device.

It is also preferable to mount the thermoelectric power generation device, the conversion device, and the wireless transmission device in one package. Mounting these components in one package facilitates handling, and also facilitates installation of a heat radiating member and a light shielding member as described later. In the following description, one package in which the thermoelectric power generation device, the conversion device, and the wireless transmission device are mounted is referred to as a "thermoelectric-wireless transmission unit" for the sake of convenience.

### [Heat radiating member]

The measurement system for steelworks equipment according to the present disclosure preferably includes a heat radiating member for cooling one or both of the conversion device and the wireless transmission device. Steelworks equipment is often at high temperatures, as mentioned above. The use of the heat radiating member can suppress the temperature rise of the conversion device and the wireless transmission device. As the heat radiating member, for example, heat radiating fins and the like may be used.

The heat radiating member can also serve as cooling means on the low temperature side of the thermoelectric power generation device. For example, in the case where the thermoelectric power generation device, the conversion device, and the wireless transmission device are mounted in one package (thermoelectric-wireless transmission unit), it is possible to cool the thermoelectric power generation device, the conversion device, and the wireless transmission device by providing the heat radiating member in the thermoelectric-wireless transmission unit.

### [Light shielding member]

The measurement system for steelworks equipment according to the present disclosure preferably includes a light shielding member for blocking direct sunlight. For example, in the case where the measurement system is installed outdoors, such as above a coke oven, direct sunlight can cause the device temperature to rise. Such temperature rise can be suppressed by blocking sunlight using the light shielding member. The light shielding member is preferably configured to block direct sunlight to at least one of the thermoelectric power generation device, the conversion device, and the wireless transmission device. For example, in the case where the thermoelectric power generation device, the conversion device, and the wireless transmission device are mounted in one package (thermoelectric-wireless transmission unit), it is possible to suppress the temperature rise of the thermoelectric power generation device, the conversion device, and the wireless transmission device by providing the light shielding member in the thermoelectric-wireless transmission unit.

The measurement system for steelworks equipment according to the present disclosure preferably includes both the heat radiating member and the light shielding member, from the viewpoint of preventing the temperature rise more effectively. In such a case, the light shielding member is preferably installed above the heat radiating member. This prevents the heat radiating member from being exposed to direct sunlight, and consequently enables the heat radiating member to function more effectively.

### [Relay device]

The measurement system according to the present disclosure further includes the relay device that relays the signal transmitted from the wireless transmission device. Thus, the signal can be stably received even at a position away from the location where the sensor is installed. The relay means is not limited, and any means capable of relaying the signal transmitted from the wireless transmission device may be used.

The number of relay devices is not limited, and any number of relay devices, i.e. one or two or more relay devices, may be used. In the case where the distance between the sensor and the reception device is long or in the case where the condition of radio waves, etc. used for wireless transmission is poor, it is preferable to use a plurality of relay devices.

### [Reception device]

The reception device receives the signal relayed by the relay device. Although the signal transmitted from the wireless transmission device is basically relayed by the relay device, it is not always necessary to relay the signal by the relay device. For example, a signal from the wireless transmission device installed at a position near the reception device can be directly received by the reception device without via the relay device. The reception device is thus configured to receive one or both of the signal transmitted from the wireless transmission device and the signal relayed by the relay device. The reception device is not limited, and any device capable of signal reception, such as a commercially available reception device, may be used.

In the measurement system according to the present disclosure, the conversion device and the wireless transmission device are driven by the power generated by the thermoelectric power generation device. This eliminates the need for wiring, batteries, and the like for supplying power to the conversion device and the wireless transmission device. The measurement system according to the present disclosure can thus be easily installed and operated even in a location where wiring and maintenance such as battery replacement are difficult.

The measurement system according to the present disclosure preferably further includes a capacitor for temporarily storing the power generated by the thermoelectric power generation device.

The application of the measurement system to a coke oven will be described in detail below.

In the case of applying the measurement system to a coke oven, the sensor is preferably used to measure the temperature of a combustion chamber. Since the temperature of the coke oven, particularly the combustion chamber, is considerably high, a thermocouple is preferably used as the sensor.

Signal transmission may be performed at any interval. For example, the power generated by the thermoelectric power generation device may be temporarily stored in the capacitor, and a signal may be transmitted when the stored power exceeds a certain amount. In this case, the transmission interval depends on the temperature of the heat source. It is therefore desirable to adjust the installation position of the thermoelectric power generation device so that the transmission interval will not be excessively long. The transmission interval is preferably 600 s or less, and more preferably 60 s or less. If the transmission interval is excessively short, the power consumption is excessively high. Accordingly, the transmission interval is preferably 0.1 s or more, and more preferably 1 s or more.

Each device included in the measurement system according to the present disclosure is preferably installed at a position where the temperature during operation does not exceed the heat resistant temperature of the device, because the oven top temperature is considerably high during operation of the coke oven. In particular, electronic devices such as the conversion device and the wireless transmission device are preferably installed at positions where the temperature is 80 °C or less. For example, the oven top temperature of the coke oven during operation is measured beforehand, and the electronic devices are installed at positions where the temperature is 80 °C or less. The electronic devices such as the conversion device and the wireless transmission device are preferably installed at positions where the temperature is 0 °C or more.

In the case where the wireless transmission device is installed on top of a typical oven, the distance from the wireless transmission device to the location where the temperature of the coke oven is managed (e.g. control room) is at least several tens of meters. Moreover, on top of the coke oven, a coal charging vehicle for charging coal into the coke oven, etc. travel, and there are many obstacles that interfere with wireless communication. The use of the relay device enables stable signal transmission and reception even in such an environment. The number of relay devices is preferably 2 or more and more preferably 3 or more, from the viewpoint of stability of transmission and reception. If the number of relay devices is excessively large, the effect is saturated, and the cost increases. The number of relay devices is therefore preferably 10 or less, and more preferably 5 or less. The number of relay devices is further preferably 4, from the viewpoint of the balance between cost and stability.

A deck for maintenance and inspection is provided on top of a typical coke oven. Accordingly, the relay device is preferably installed on the deck.

The reception device can be installed at any position. The reception device may be installed at a position away from the coke oven, such as the location where the temperature of the coke oven is managed (e.g. control room). The reception device may be installed at a position closer to the coke oven, such as the deck on top of the coke oven, from the viewpoint of enabling stable reception while reducing the number of relay devices required.

With a coke production method according to an embodiment of the present disclosure, the temperature of the coke oven, for example, the temperature of the combustion chamber, can be measured using the measurement system described above. By controlling the combustion state of the coke oven based on the measured temperature, coke with stable quality can be produced.

The method of controlling the combustion state is not limited, and any method, such as adjusting the amount of fuel supplied to the combustion chamber, may be used. The adjustment of the combustion state is preferably performed for each combustion chamber. For example, a target temperature is determined for each combustion chamber beforehand, and the combustion state of the combustion chamber is adjusted based on the difference between the measured temperature of the combustion chamber and the target temperature. The method of determining the target temperature is not limited, and may be any method including various known methods. For example, the time required for coking (actual coking time) is obtained from actual operation results for each carbonization chamber included in the coke oven, and the target temperature is determined from the difference from the target coking time.

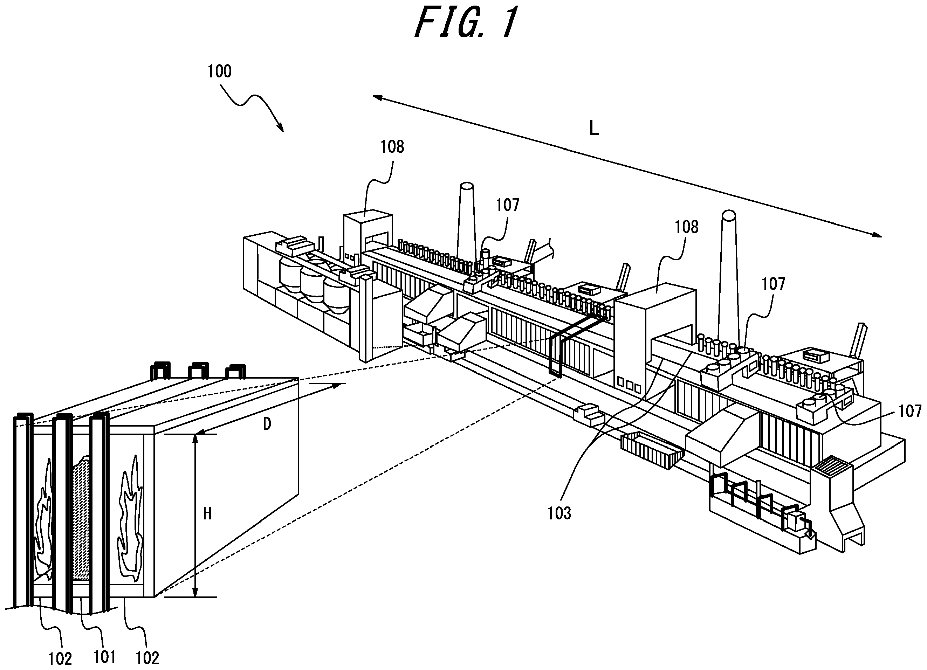

In an actual coke oven, a plurality of carbonization chambers and a plurality of combustion chambers are alternately arranged continuously, as illustrated in FIG. 1. Hence, coking in a carbonization chamber is influenced by the temperatures of a plurality of combustion chambers adjacent to the carbonization chamber. It is therefore preferable to determine the target temperature of each combustion chamber based on the influence of the temperature of the combustion chamber on the plurality of carbonization chambers.

The foregoing control may be performed based on a database obtained by collecting, using the measurement system for steelworks equipment according to the present disclosure, the relationship between the temperature of each combustion chamber and the time actually required for coking (coking time). The use of such a database enables control in consideration of the different characteristics of each kiln. Herein, the term "coking time" refers to the time from when coal is charged into the carbonization chamber to when the coal is carbonized and turned into coke.

An example of an embodiment in this specification will be described in more detail below, with reference to the drawings. In the following description, too, the application of the measurement system to a coke oven will be described.

FIG. 1 is a schematic diagram illustrating an example of the structure of a coke oven. A coke oven 100 has a structure in which carbonization chambers 101 for storing and carbonizing coal and combustion chambers 102 for supplying heat to the carbonization chambers 101 are alternately arranged in the oven width direction. Heat is supplied from a combustion chamber 102 to a carbonization chamber 101 through a refractory separating the carbonization chamber and the combustion chamber. A typical coke oven in a steelworks includes at least several tens of carbonization chambers, and its length L in the oven width direction is several hundred meters. The size of each of the carbonization chamber 101 and the combustion chamber 102 is, for example, about 7 m in height H and about 16 m in depth D.

In a typical coke oven, a pair of a carbonization chamber and a combustion chamber adjacent to each other is called "one kiln" or "one gate", and a block of about 50 kilns is called a "coke oven battery". Coal charging vehicle rails 103 are laid on top of the coke oven, and a coal charging vehicle 107 for charging coal into each carbonization chamber 101 runs on the coal charging vehicle rails 103. A coal tower 108 for supplying coal to the coal charging vehicle 107 is located between or at the end of a plurality of coke oven batteries.

In such a coke oven including many combustion chambers, temperature measurement is necessary in order to control the temperature of each combustion chamber. Hence, a sensor (thermocouple) is installed in each combustion chamber, and the temperature is measured by the measurement system according to the present disclosure.

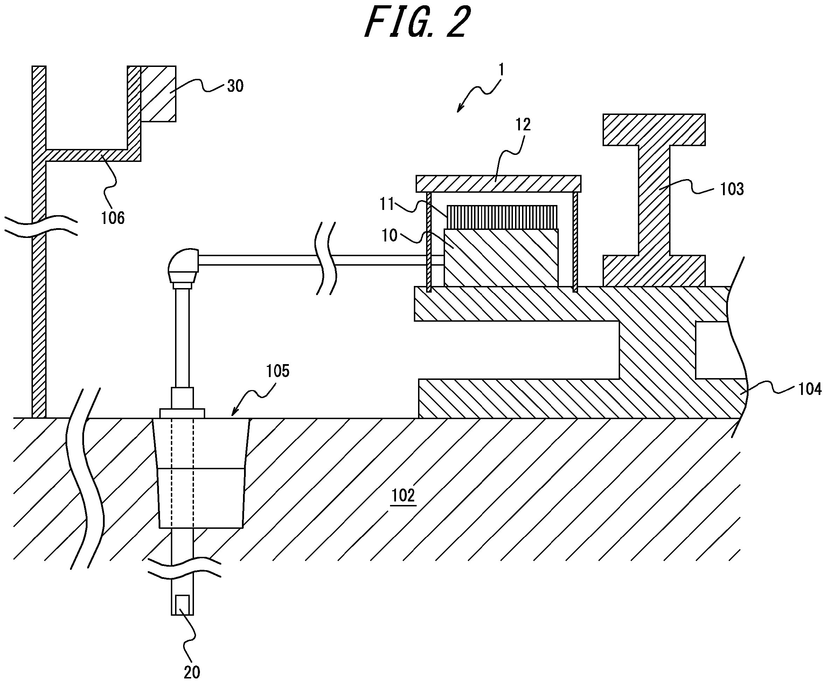

FIG. 2 is a schematic diagram illustrating a measurement system 1 for steelworks equipment (hereinafter "measurement system 1") according to an embodiment of the present disclosure. The measurement system 1 includes a thermoelectric-wireless transmission unit 10 in which a thermoelectric power generation device, a conversion device, and a wireless transmission device are mounted in one package, a thermocouple 20 as a sensor, and a relay device 30.

The measurement system 1 is installed on top of the coke oven 100, i.e. on or above the coke oven 100. Here, since the temperature on top of the coke oven 100 is high, if the devices are installed directly on the oven, the devices may be damaged. Moreover, the coal charging vehicle rails 103 are laid on top of the coke oven, and the coal charging vehicle 107 for charging coal into each carbonization chamber 101 runs on the coal charging vehicle rails 103, as mentioned above. It is therefore necessary to install the devices so as not to interfere with the running of the coal charging vehicle 107. In this embodiment, the thermoelectric-wireless transmission unit 10 is installed on coal charging vehicle rail girders 104 laid as a support member for laying the coal charging vehicle rails 103.

Heat radiating fins 11 and a light shielding member 12 for blocking direct sunlight are provided on the upper surface of the thermoelectric-wireless transmission unit 10. Thus, the temperature rise of the thermoelectric-wireless transmission unit 10 can be suppressed. The heat radiating fins 11 also serve to cool the low temperature side of the thermoelectric power generation device included in the thermoelectric-wireless transmission unit 10.

The thermocouple 20 is inserted inside the combustion chamber 102 through an inspection hole 105 provided in the upper part of the combustion chamber 102. The thermocouple 20 is connected to the conversion device in the thermoelectric-wireless transmission unit 10, and the temperature measured by the thermocouple 20 is transmitted by the wireless transmission device in the thermoelectric-wireless transmission unit 10.

An oven top deck 106, which is a corridor for performing equipment maintenance and inspection, etc., is installed on top of the coke oven 100. In this embodiment, the relay device 30 is installed on the oven top deck 106. In FIG. 2, the parts are illustrated at different scales for the sake of convenience. In an actual coke oven, an oven top deck is located at a height of about 8 m above the oven. Therefore, the relay device 30 can receive wireless signals from a wide range without being affected by the heat of the coke oven.

Although the installation state of one thermocouple 20 is illustrated in FIG. 2, the actual coke oven 100 includes many combustion chambers 102 as illustrated in FIG. 1. Hence, it is preferable to install at least one sensor per combustion chamber, in order to monitor the temperature of each combustion chamber 102. In this case, one thermoelectric-wireless transmission unit may be used for one sensor. Alternatively, one thermoelectric-wireless transmission unit may process signals from a plurality of sensors.

It is more preferable to install two or more sensors per combustion chamber, from the viewpoint of measuring the temperature in the combustion chamber more accurately. In the case of installing a plurality of sensors in one combustion chamber, it is preferable to space the plurality of sensors apart in the depth direction of the combustion chamber (the direction of arrow D in FIG. 1).

Meanwhile, since one relay device can relay signals from a plurality of wireless transmission devices, there is no need to use the same number of relay devices as the wireless transmission devices (thermoelectric-wireless transmission units). Therefore, the number of relay devices included in the measurement system is preferably less than the number of wireless transmission devices, more preferably less than or equal to 1/2 of the number of wireless transmission devices, and further preferably less than or equal to 1/5 of the number of wireless transmission devices. The number of relay devices included in the measurement system is even more preferably less than or equal to 1/10 of the number of wireless transmission devices, from the viewpoint of cost effectiveness.

For example, in the case of a coke oven including 65 combustion chambers, two sensors and thermoelectric-wireless transmission units per combustion chamber, a total of 130 sensors and thermoelectric-wireless transmission units, are arranged, and four relay devices are used to relay radio waves. Meanwhile, one reception device is installed at the end of the coke oven. The reception device may be installed in, for example, a control room for controlling the coke oven.

The measurement system according to the present disclosure may be additionally introduced into a coke oven that already includes temperature measurement means and a temperature management system. In such a case, the existing temperature management system may be used to perform temperature management based on the temperature measured by the measurement system according to the present disclosure. Here, there is a possibility that the temperature measured by the existing temperature measurement means and the temperature measured by the measurement system according to the present disclosure do not match. In view of this, the relationship between the temperature measured by the existing temperature measurement means and the temperature measured by the measurement system according to the present disclosure may be determined beforehand. Then, the temperature measured by the measurement system according to the present disclosure may be converted into the temperature measured by the existing temperature measurement means based on the relationship, and temperature management may be performed based on the converted temperature.

Although the above describes an example of measuring the temperature in the combustion chamber of the coke oven, the present disclosure is not limited to such, and any element in any equipment in steelworks may be subjected to measurement.

### (Embodiment 2)

A measurement system according to Embodiment 2 of the present disclosure will be described below. The description of the same parts as those in Embodiment 1 is omitted here.

The measurement system according to Embodiment 2 of the present disclosure has the same structure as the measurement system according to Embodiment 1. In addition, more relay devices are located in a part where an obstacle stays for a longer time than in a part where the obstacle stays for a shorter time.

As described in Embodiment 1 above, the use of the relay device makes it possible to reliably monitor the measurement results even at a position away from the installation location of the sensor. However, since various large-sized mobile devices are used in steelworks equipment, there is a possibility that such devices interfere with wireless communication and hinder signal relay by the relay device. For example, in the case of a coke oven, rails are laid on top of the coke oven, and a coal charging vehicle for charging coal as raw material into each carbonization chamber of the coke oven runs on the rails. The presence of a large device such as a coal charging vehicle interferes with wireless communication. By arranging the number (density) of relay devices corresponding to the staying time of such a moving obstacle, the influence of the obstacle can be reduced and measurement data can be received more stably.

Herein, the "part where an obstacle stays for a longer time" refers to an area where an obstacle such as a coal charging vehicle stays for a longer time, and the "part where the obstacle stays for a shorter time" refers to an area where the obstacle stays for a shorter time than in the part where the obstacle stays for a longer time. For example, the entire area in which the relay devices are installed is divided into a plurality of sections, and the number of relay devices to be installed in each section is determined depending on the staying time of the obstacle in the section.

The number (total number) of relay devices is not limited, and may be any number as long as they are arranged in the foregoing manner. Usually, the number (a plurality) of relay devices depending on the distance between the sensor and the reception device, the state of radio waves, and the like are used.

The application of the measurement system according to Embodiment 2 to a coke oven will be described in detail below.

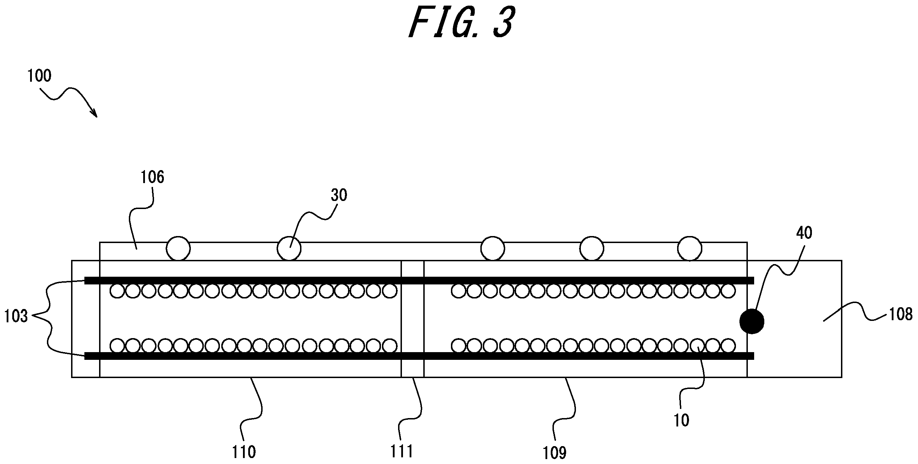

A coke oven typically includes many combustion chambers, as illustrated in FIG. 1. For example, in the case of a coke oven (coke oven battery) including 65 combustion chambers, two sensors and thermoelectric-wireless transmission units per combustion chamber, a total of 130 sensors and thermoelectric-wireless transmission units, are arranged, and two to five relay devices are used to relay radio waves. Meanwhile, one reception device is installed at the end of the coke oven. The reception device may be installed in, for example, a control room for controlling the coke oven. An example of the arrangement of relay devices will be described in detail below, with reference to FIG. 3.

FIG. 3 is a schematic diagram illustrating the arrangement of relay devices according to an embodiment of the present disclosure. A coal tower 108 is located at one end of a coke oven 100, and an intermediate deck 111 is located between a coke oven battery 109 closer to the coal tower 108 and a coke oven battery 110 farther from the coal tower 108. Coal charging vehicle rail girders (not illustrated) and coal charging vehicle rails 103 laid on the coal charging vehicle rail girders are installed on the coke oven 100.

Two sensors are installed in each combustion chamber in the coke oven 100, and a thermoelectric-wireless transmission unit 10 corresponding to each sensor is attached as illustrated in FIG. 2. A plurality of relay devices 30 are installed on an oven top deck 106, and a reception device 40 is installed near the coal tower 108 at the end of the coke oven 100.

A coal charging vehicle runs on the coal charging vehicle rails 103 and charges coal into each combustion chamber. Usually, the time during which the coal charging vehicle stays on the coke oven battery 110 farther from the coal tower 108 is shorter than the time during which the coal charging vehicle stays on the coke oven battery 109 closer to the coal tower 108. Accordingly, the number (N1) of relay devices 30 installed on the coke oven battery 109 is made larger than the number (N2) of relay devices 30 installed on the coke oven battery 110. N2 is preferably 1 to 2. N1 is preferably 2 to 4 and larger than N2. For example, in FIG. 3, the number of relay devices 30 installed on the coke oven battery 109 is 3, and the number of relay devices 30 installed on the coke oven battery 110 is 2.

In other words, in this example, a plurality of relay devices are installed on the coke oven made up of a plurality of coke oven batteries so as to be spaced apart in the oven width direction of the coke oven (the direction of arrow L in FIG. 1), and the relay device arrangement density is higher for a coke oven battery closer to the coal tower.

Although the above describes an example in which the number of relay devices installed is set for each coke oven battery, the unit of region for which the number of relay devices installed is set is not limited to such, and any unit of region may be selected.

Although the above describes an example of measuring the temperature in the combustion chamber of the coke oven, the present disclosure is not limited to such, and any element in any equipment in steelworks may be subjected to measurement.

### (Embodiment 3)

A measurement system according to Embodiment 3 of the present disclosure will be described below. The description of the same parts as those in Embodiments 1 and 2 is omitted here.

The measurement system according to Embodiment 3 of the present disclosure has the same structure as the measurement system according to Embodiment 1 or 2. In addition, at least one relay device is installed on a moving obstacle.

As described in Embodiment 1 above, the use of the relay device makes it possible to reliably monitor the measurement results even at a position away from the installation location of the sensor. However, since various large-sized mobile devices are used in steelworks equipment, there is a possibility that such devices interfere with wireless communication and hinder signal relay by the relay device. For example, in the case of a coke oven, rails are laid on top of the coke oven, and a coal charging vehicle for charging coal as raw material into each carbonization chamber of the coke oven runs on the rails. The presence of a large device such as a coal charging vehicle interferes with wireless communication. By installing at least one relay device on such a moving obstacle itself, measurement data can be received stably without being interfered by the obstacle.

The relay devices other than the relay device installed on the obstacle may be installed at any positions without limitation, but are normally installed at locations that do not move.

The application of the measurement system according to Embodiment 3 to a coke oven will be described in detail below.

An oven top deck 106, which is a corridor for performing equipment maintenance and inspection, etc., is installed on top of the coke oven 100, as illustrated in FIG. 2. In an embodiment of the present disclosure, part of the relay devices 30 can be installed on the oven top deck 106. In an actual coke oven, an oven top deck is located at a height of about 8 m above the oven. Therefore, the relay device 30 can receive wireless signals from a wide range without being affected by the heat of the coke oven. In this embodiment, the other relay device (or devices) is installed on a moving obstacle such as a coal charging vehicle.

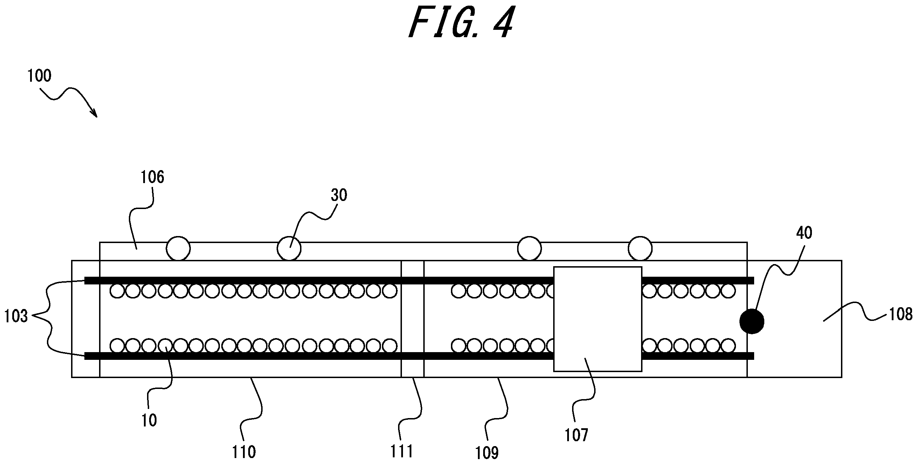

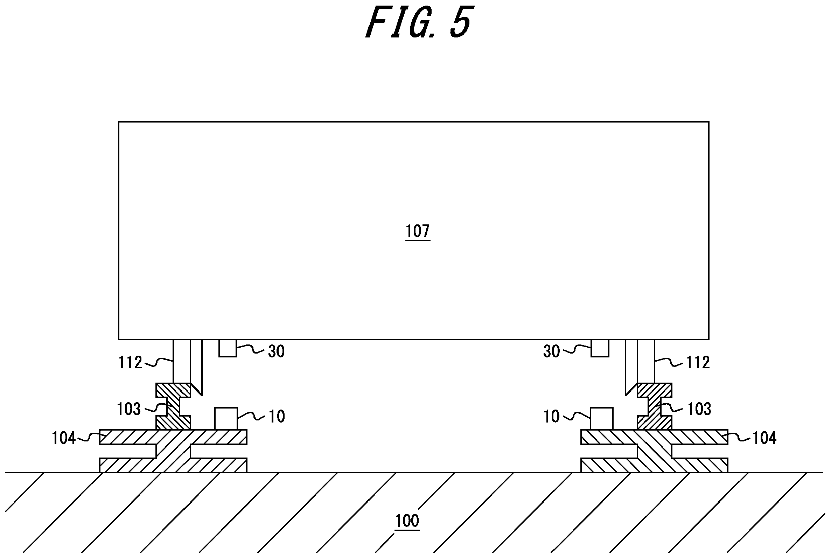

An example of the arrangement of relay devices will be described in detail below, with reference to FIGS. 4 and 5.

FIG. 4 is a schematic diagram illustrating the arrangement of relay devices according to an embodiment of the present disclosure. A coal tower 108 is located at one end of the coke oven 100, and an intermediate deck 111 is located between a coke oven battery 109 closer to the coal tower 108 and a coke oven battery 110 farther from the coal tower 108. Coal charging vehicle rail girders (not illustrated) and coal charging vehicle rails 103 laid on the coal charging vehicle rail girders are installed on the coke oven 100. A coal charging vehicle 107 for charging coal into each combustion chamber runs on the coal charging vehicle rails 103.

Two sensors are installed in each combustion chamber in the coke oven 100, and a thermoelectric-wireless transmission unit 10 corresponding to each sensor is attached as illustrated in FIG. 2. A plurality of relay devices 30 are installed on the oven top deck 106, and a reception device 40 is installed near the coal tower 108 at the end of the coke oven 100. In this embodiment, relay devices 30 are also installed on the coal charging vehicle 107 as a moving obstacle as described below.

FIG. 5 is a schematic diagram illustrating the installation state of relay devices on the coal charging vehicle 107 according to an embodiment of the present disclosure. A thermoelectric-wireless transmission unit 10 is installed on each of a pair of coal charging vehicle rail girders 104 installed on the upper surface of the coke oven 100. Relay devices 30 are installed on the coal charging vehicle 107 running on the coal charging vehicle rails 103. It is preferable that each relay device 30 installed on the coal charging vehicle 107 is located on the same side of the coal charging vehicle rail 103 as the wireless transmission device. In the example illustrated in FIG. 5, the thermoelectric-wireless transmission unit 10 is located inside the coal charging vehicle rail 103. Hence, the relay device 30 installed on the coal charging vehicle 107 is also located inside the wheel 112 of the coal charging vehicle 107 so as to be close to the thermoelectric-wireless transmission unit 10. In the case where the thermoelectric-wireless transmission unit 10 is located outside the coal charging vehicle rail 103, the relay device 30 installed on the coal charging vehicle 107 is also located outside the wheel 112 of the coal charging vehicle 107.

The relay device may be integrated with an antenna for transmission and reception, but it is also preferable to use a relay device whose body portion and antenna portion can be installed separately from each other via a cable or the like. For example, the antenna may be installed at the position of 30 in FIG. 5, and the body of the relay device may be installed at another position of the coal charging vehicle 107.

Although the above describes an example of measuring the temperature in the combustion chamber of the coke oven, the present disclosure is not limited to such, and any element in any equipment in steelworks may be subjected to measurement.

### REFERENCE SIGNS LIST

- 1: measurement system for steelworks equipment
- 10: thermoelectric-wireless transmission unit
- 11: heat radiating fin
- 12: light shielding member
- 20: thermocouple
- 30: relay device
- 40: reception device
- 100: coke oven
- 101: carbonization chamber
- 102: combustion chamber
- 103: coal charging vehicle rail
- 104: coal charging vehicle rail girder
- 105: inspection hole
- 106: oven top deck
- 107: coal charging vehicle
- 108: coal tower
- 109: coke oven battery
- 110: coke oven battery
- 111: intermediate deck
- 112: wheel

## Claims

1. A measurement system for steelworks equipment, comprising:
a thermoelectric power generation device;
a sensor;
a conversion device configured to convert a signal output from the sensor into a signal that is wirelessly transmittable;
a wireless transmission device configured to wirelessly transmit the signal converted by the conversion device;
a relay device configured to relay the signal transmitted from the wireless transmission device; and
a reception device configured to receive one or both of the signal transmitted from the wireless transmission device and the signal relayed by the relay device,
wherein the conversion device and the wireless transmission device are driven by power generated by the thermoelectric power generation device.

2. The measurement system for steelworks equipment according to claim 1, wherein more relay devices are located in a part where an obstacle stays for a longer time than in a part where the obstacle stays for a shorter time.

3. The measurement system for steelworks equipment according to claim 1 or 2, wherein at least one relay device is installed on a moving obstacle.

4. The measurement system for steelworks equipment according to any one of claims 1 to 3, wherein the sensor is a temperature sensor.

5. A coke oven comprising
the measurement system for steelworks equipment according to any one of claims 1 to 4.

6. A coke production method of producing coke using a coke oven, the coke production method comprising
measuring a temperature of the coke oven using the measurement system for steelworks equipment according to any one of claims 1 to 4.
